(19) Europäisches Patentamt
European Patent Office
Office européen des brevets

(11) Numéro de publication : **0 090 123
B1**

# FASCICULE DE BREVET EUROPÉEN

(45) Date de publication du fascicule du brevet :
**16.04.86**

(51) Int. Cl.⁴ : **B 65 G 61/00, B 65 G 57/04,
B 65 G 57/22**

(21) Numéro de dépôt : **82810144.4**

(22) Date de dépôt : **31.03.82**

(54) **Appareil pour la manutention d'emballages, notamment de cartons de cigarettes.**

(43) Date de publication de la demande :
**05.10.83 Bulletin 83/40**

(45) Mention de la délivrance du brevet :
**16.04.86 Bulletin 86/16**

(84) Etats contractants désignés :
**AT BE CH DE FR GB IT LI LU NL SE**

(56) Documents cités :
**EP-A- 0 059 477
FR-A- 2 255 216
FR-A- 2 396 709
GB-A- 1 571 893
US-A- 3 884 363**

(73) Titulaire : **FABRIQUES DE TABAC REUNIES S.A.
Quai Jeanrenaud 3 P.O. Box 11
CH-2003 Neuchâtel-Serrières (CH)**

(72) Inventeur : **Berger, Maurice
Ch. des Polonais 43
CH-2016 Cortaillod (CH)**
Inventeur : **Bernasconi, Jean-François
Avenue de la Gare 6a
CH-2013 Colombier (CH)**
Inventeur : **Juillerat, Michel Roger
Clos de Serrières 31
CH-2003 Neuchâtel (CH)**

(74) Mandataire : **Bovard, Fritz Albert et al
Bovard SA Ingénieurs-conseils ACP Optingenstrasse
16
CH-3000 Berne 25 (CH)**

## Description

Dans l'industrie de la fabrication des cigarettes, on utilise déjà de nombreux dispositifs et appareils fonctionnant de façon automatique tout au long de la chaîne de production des cigarettes et de leur mise en paquets, ainsi que lors de la formation de cartouches comportant un certain nombre de paquets enfermés dans un emballage généralement en papier. On connaît également des appareils qui sont capables de former automatiquement des assemblages parallélépipédiques comportant un nombre prédéterminé de cartouches de cigarettes, d'engager chacun de ces assemblages dans un carton d'emballage, de rabattre les volets d'extrémité de ces cartons, de les coller et de les contrôler.

Le but de la présente invention est de poursuivre l'automatisation de ces diverses opérations en créant un appareil capable de piloter la manutention des cartons de cigarettes et plus précisément leur arrangement sur des palettes standard utilisées pour l'expédition des cartons.

Dans ce but, la présente invention a pour objet un appareil pour la manutention d'emballages, notamment de cartons de cigarettes, comportant un dispositif de préhension pourvu d'un organe de préhension mobile verticalement et capable de saisir un emballage situé dans une position de présentation, un dispositif de présentation rétractile capable de supporter un emballage et de l'amener dans la position de présentation par un déplacement horizontal, cette position de présentation étant située sous le dispositif de préhension, et des moyens de commande et d'entraînement, capables d'amener un emballage saisi par le dispositif de préhension dans une position prédéterminée par rapport à un réceptacle destiné à recevoir une pluralité d'emballages.

Des appareils de ce genre sont déjà connus, notamment par le brevet français FR-A-2 255 216. Toutefois, cet appareil ne constitue pas une solution aux problèmes posés. En effet, dans cet appareil connu, le dispositif de préhension est agencé de façon à saisir en une fois l'ensemble des objets qui constituent une couche dans le réceptacle. Il est donc nécessaire d'arranger au préalable les différents objets qui constituent une couche sur le dispositif de présentation rétractile avant que ce dernier ne déplace les objets de cette couche jusque dans une position située sous le dispositif de préhension. En outre, dans cet appareil connu, le réceptacle lui-même est supporté par un dispositif mobile de sorte que la mise en position de chargement de réceptacles tels que des palettes standard par exemple, ne peut pas être réalisée dans tous les cas au moyen d'engins de transport usuels.

Dans le but de permettre une automatisation complète du chargement de réceptacles constitués par des palettes standard, l'appareil de manutention selon l'invention est caractérisé en ce que le dispositif de préhension comporte d'une part un pont couvrant une surface qui est un multiple de celle d'un emballage et qui correspond à la surface du réceptacle, et d'autre part des moyens pour déplacer l'organe de préhension dans deux directions horizontales, dans les limites du pont, en ce que des détecteurs déterminent un emplacement fixe pour le réceptacle dans une position de chargement, et en ce que les moyens de commande comportent des moyens de programmation qui assurent le placement d'emballages successifs en des emplacements prédéterminés de manière à former sur le réceptacle plusieurs couches d'emballages comportant chacune un nombre prédéterminé d'emballages disposés selon un arrangement également prédéterminé.

On va décrire ci-après, à titre d'exemple, une forme de réalisation de l'appareil selon l'invention, en se référant au dessin annexé dont :

la figure 1 est une vue en perspective schématique montrant l'agencement général de l'appareil de manutention, et

la figure 2 est une vue en coupe partielle, également schématique de cet appareil.

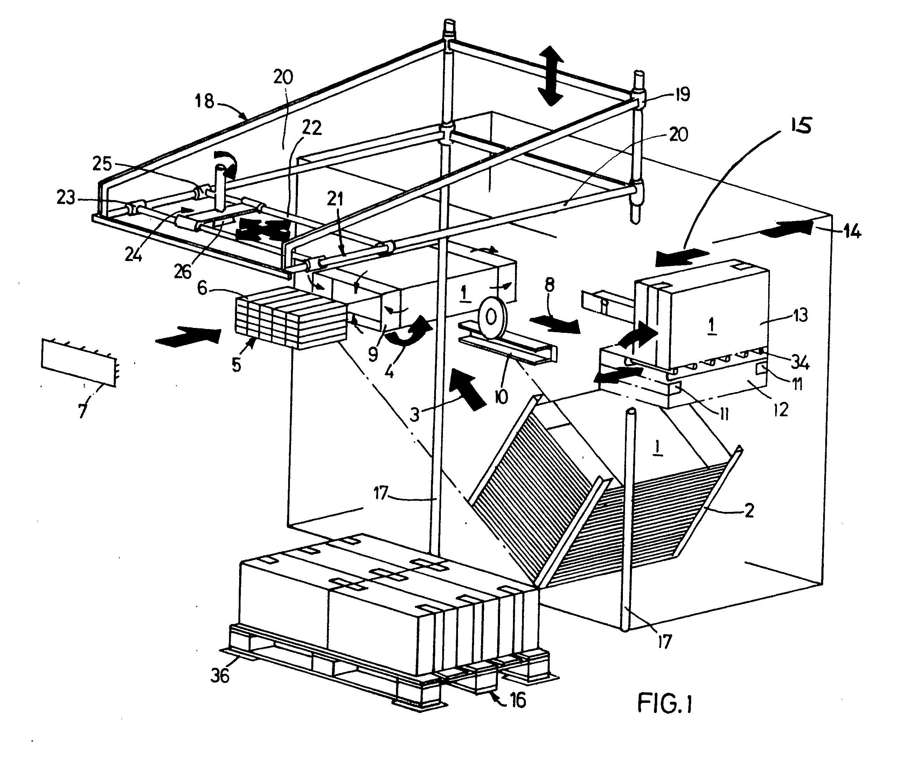

Une des particularités avantageuses de l'appareil représenté à la fig. 1, est que ses dimensions sont telles qu'il peut être disposé dans une position exactement adjacente à une installation déjà existante dans laquelle s'effectue automatiquement le remplissage et la fermeture de cartons d'emballage de cigarettes 1. On commencera donc par décrire succinctement la disposition de cet appareil de remplissage. Les cartons 1 à l'état replié sur eux-mêmes sont empilés entre quatre rails en forme de cornière 2 disposés obliquement. Sous cet empilage est placé un dispositif de transport de type connu (non représenté) capable de déplacer les cartons un à un obliquement vers le haut dans le sens de la flèche 3. A cet endroit, ils sont ouverts au moyen d'organes de préhension à ventouse. Ensuite l'ensemble pivote suivant la flèche 4 pour se trouver dans une position de remplissage horizontale. Chaque carton reçoit alors un empilage 5 de cartouches 6 de paquets de cigarettes constitué de 25 cartouches qui ont été empilées directement à la sortie de l'appareil d'emballage et qui ont ensuite été contrôlées au moyen d'un poussoir 7 muni de palpeurs. Ces palpeurs permettent de contrôler le bon remplissage du box. S'il venait à manquer une ou plusieurs cartouches, l'appareil le signalerait (dispositif opto-acoustique) et placerait le carton en position arrière suivant la flèche 14, après avoir passé devant le dispositif de collage qui n'aurait pas fonctionné. Dans le cas normal le poussoir 7 fait alors entrer l'empilage 5 dans le carton 1 se trouvant dans la position de remplissage. Les rabats 9 du carton sont alors fermés par des volets articulés (non représentés). Ensuite, le carton se déplace horizontalement selon la flèche 8 et passe devant un dispositif de collage 10 des rabats avec bande autocollante. Chaque carton parvient alors dans la position de réception 12, puis est saisi par un dispositif de basculement (non représenté) qui l'amène, après l'avoir fait tourner de 90° dans une position de sortie 13. Ensuite, il sera déplacé vers l'avant dans le sens de la flèche 15 par des moyens qui seront décrits plus loin.

Comme on le voit au dessin, l'ensemble des appareils décrits jusqu'à maintenant occupe un espace en forme de parallélépipède rectangle dont la largeur est un peu supérieure à la longueur de chaque carton 1.

Un carton 1 parvenu dans la position de sortie se trouve à une certaine hauteur au-dessus du sol et, jusqu'à maintenant, il était nécessaire de le prendre à la main et de l'arranger sur une palette standard. Celle-ci était amenée, au moyen d'un engin de transport, au voisinage de l'appareillage de remplissage et de fermeture des cartons et elle était placée de façon qu'il soit possible d'arranger les cartons parvenant successivement dans la position de sortie aussi aisément que possible sur la palette.

Comme on le voit à la fig. 1, les moyens qui assurent le déplacement des empilages 5 depuis la sortie de l'appareil d'emballage (non représenté) pour les introduire dans les cartons en position de remplissage, sont situés devant l'appareillage de remplissage et de fermeture des cartons, lequel occupe un espace en forme de parallélépipède rectangle. Toutefois, on a constaté que la longueur de cet espace parallélépipédique était nettement supérieure à l'encombrement des moyens de déplacement précités, de sorte qu'il restait suffisamment de place sur le côté frontal de l'appareillage existant pour y placer la palette en cours de chargement. Dans certains cas, les moyens de déplacement des empilages 5 sont placés sur le côté arrière de l'appareillage de remplissage et de fermeture des cartons, c'est-à-dire sur le côté opposé à celui qui est visible à la fig. 1, de sorte que le côté frontal est entièrement libre. Cependant, même dans le cas où ces moyens de déplacement sont situés sur le côté frontal de l'appareillage de remplissage et de fermeture, ils laissent suffisamment de place libre sur leur côté pour que l'espace situé au-dessus d'une palette 16 placée dans l'emplacement de chargement visible à la fig. 1 soit entièrement dégagé. Cette constatation a permis de concevoir un appareil de manutention automatique qui va être décrit ci-après et qui est susceptible d'être monté dans une position directement adjacente à l'appareillage de remplissage sans gêner aucune des autres opérations déjà automatisées. En particulier, comme on l'a dit précédemment, les moyens d'introduction des empilages 5 dans les cartons 1 placés en position de remplissage, peuvent être disposés aussi bien sur le côté avant que sur le côté arrière de l'appareillage de remplissage et de fermeture des cartons.

L'appareil de manutention proprement dit comporte deux montants verticaux fixes 17 constitués de préférence de barres métalliques cylindriques. Sur ces barres coulisse un pont 18 qui est constitué d'une structure rigide munie de quatre manchons de guidage 19 engagés deux à deux sur les barres 17. Le pont s'étend en porte-à-faux vers l'avant de façon à pouvoir se déplacer verticalement sur les montants 17. L'entraînement du pont 18 en hauteur peut se faire par n'importe quel moyen connu par exemple en équipant le pont d'un moteur électrique dont le pignon d'axe horizontal engrène dans une crémaillère verticale. On peut toutefois également prévoir un système à poulie et câble, comme on le verra plus loin. Bien entendu, des systèmes à vérins peuvent aussi être envisagés.

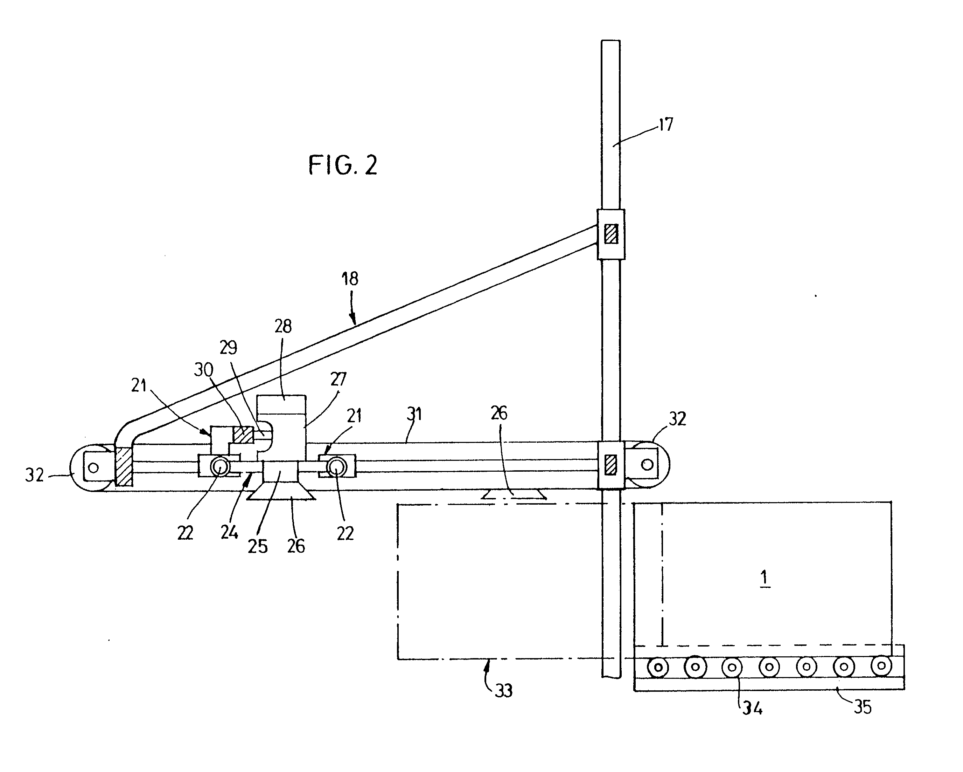

Le pont 18 comporte deux rails de guidage horizontaux 20 qui sont orientés perpendiculairement au plan défini par les deux montants 17 et qui sont constitués dans l'exécution décrite ici, par des barres cylindriques, la longueur de ces barres étant suffisante pour permettre l'arrangement des cartons 1 sur une palette 16, comme on le verra plus loin. Un coulisseau 21 constitué de deux barres de guidage parallèles 22 reliées entre elles et munies de manchons de guidage 23 à leurs extrémités, est guidé par les deux barres 20 de façon à pouvoir se déplacer longitudinalement sur le pont 18. Les deux barres transversales 22 servent en outre de moyens de guidage à un chariot 24 qui est constitué par une plaque plane équipée de deux paliers, un à chacune de ses extrémités, chacun de ces paliers étant engagé sur une des barres 22. Enfin, le chariot 24 porte un organe de préhension 25 qui comporte une ventouse 26 disposée sous le chariot et des éléments de support et de commande qui sont représentés plus en détail à la fig. 2 où l'on voit également les différents moyens d'entraînement qui permettent de faire balayer à la ventouse 26 tout l'espace occupé par le pont 18 au cours de ses déplacements verticaux.

On reconnaît en effet à la fig. 2 un des montants 17, le pont 18, le coulisseau 21 dont les barres de guidage 22 sont vues ici en coupe, et le chariot 24. La ventouse 26 est connectée à des moyens d'aspiration (non représentés) qui peuvent comporter des tuyaux souples allant depuis le socle 25 de l'organe de préhension, qui présente la forme d'une ventouse 26 à une pompe d'aspiration. Le socle 25 est fixé rigidement à la planche du chariot 24 et supporte, dans l'exemple représenté, les stators de deux moteurs désignés par 27 et 28. Le moteur 28 agit pas à pas sur un arbre interne dont la ventouse 26 est solidaire, de sorte qu'il peut faire tourner cette ventouse autour de son axe vertical, tandis que le moteur 27 comporte un pignon 29 qui engrène dans une crémaillère transversale 30 montée sur le coulisseau 21. Bien entendu, tout autre moyen d'entraînement assurant le déplacement du chariot 24 le long des barres 22 peut également être prévu notamment avec des vérins hydrauliques ou pneumatiques.

Pour le déplacement du coulisseau 21 le long des barres de guidage 20 du pont 18, on peut prévoir, comme le montre la fig. 2, un câble ou une chaîne 31 monté sur deux poulies 32 pivotant aux deux extrémités du pont 18. La chaîne ou le câble 31 étant fixé par ses deux extrémités au coulisseau 21 et l'une des poulies 32 étant commandée par un moteur (non représenté) on voit que le déplacement du coulisseau 21 peut être facilement commandé électriquement.

Pour permettre à l'organe de transport ou de préhension 26 de saisir un carton 1 d'emballage situé dans l'emplacement de présentation désigné à la fig. 2 par 33, un train de galets 34 est monté entre deux paires de rails de guidage à profil en U 35 disposés horizontalement et engagés sur les deux extrémités des galets. Ceux-ci sont entraînés par un moteur et peuvent rouler sur la partie la plus basse des rails 35 qui sont placés parallèlement à la direction longitudinale du pont 18 derrière les montants 17. La longueur du train de galets 34 sera au moins égale à celle des cartons 1. En se référant à nouveau à la fig. 1, on voit que le train de galets 34 lorsqu'il se trouve dans la position représentée, définit la position de contrôle 13. On conçoit que si le contrôle est positif, les galets sont entraînés de façon à rouler dans les rails 35 vers l'avant. Comme ils supportent un carton 1, celui-ci est propulsé vers l'avant à une vitesse double de celle du train de galets et parvient donc dans la position 33 dans laquelle la ventouse 26 peut le saisir par le milieu de sa longueur alors que le train de galets 34 ne se déplace que sur la moitié de sa propre longueur. Une fois que le carton 1 a été saisi par la ventouse 26 dans la position 33, le train de galets 34 est ramené dans la position initiale, de sorte que l'espace situé sous le pont 18 est de nouveau entièrement dégagé.

Pour permettre le garnissage automatique de la palette 16, il suffit d'associer à l'appareil de manutention décrit des capteurs de position capables de détecter la présence de la palette 16 et un dispositif de commande programmable par exemple un microprocesseur agissant sur les moteurs des moyens d'entraînement décrits précédemment. Ainsi, on voit à la fig. 1 des capteurs de position 36 constitués par des plaquettes mobiles qui sont disposées à fleur du sol et qui ferment des contacts lorsque les angles d'une palette 16 reposent sur eux. Le dispositif de commande peut être agencé de façon que la fermeture des quatre contacts 36 enclenchent un programme de déplacements successifs de la ventouse 26 ainsi que d'enclenchements et de déclenchements de ses moyens d'aspiration. Dès lors, la ventouse peut venir automatiquement chercher les cartons 1 placés dans la position de présentation et les disposer sur la palette 16 en les répartissant de façon à ce qu'ils se trouvent les uns à côté des autres sur cette palette et forment ensuite des couches successives. Le programme peut être agencé de façon que les orientations des cartons alternent d'une couche à l'autre. Dans l'exemple représenté, les dimensions des cartons sont telles que six cartons disposés en deux rangées de trois occupent toute la surface d'une palette, toutefois d'autres agencements sont encore possibles.

Le dispositif de commande comportera les circuits électroniques, ainsi que les éléments de contrôle et les contacts nécessaires pour assurer le déroulement complet et précis des opérations à effectuer. Ainsi, des contacts de fin de course et des contacts intermédiaires seront placés le long des barres 22 et 20 afin que la position momentanée du chariot 24 puisse être relevée à chaque instant afin de contrôler le déroulement du programme. Le programme d'exécution des opérations pourra être modifié selon les besoins, en utilisant les moyens connus de la technologie électronique.

**Revendications**

1. Appareil pour la manutention d'emballages, notamment de cartons (1) de cigarettes, comportant un dispositif de préhension (18, 21, 24, 26) pourvu d'un organe de préhension (26) mobile verticalement et capable de saisir un emballage situé dans une position de présentation (33), un dispositif de présentation rétractile (34, 35) capable de supporter un emballage (1) et de l'amener dans la position de présentation (33) par un déplacement horizontal, cette position de présentation étant située sous le dispositif de préhension, et des moyens de commande (20, 21, 24) et d'entraînement (29, 30, 31), capables d'amener un emballage saisi par le dispositif de préhension dans une position prédéterminée par rapport à un réceptacle (16) destiné à recevoir une pluralité d'emballages (1), caractérisé en ce que le dispositif de préhension comporte d'une part un pont (18) couvrant une surface qui est un multiple de celle d'un emballage et qui correspond à la surface du réceptacle, et d'autre part des moyens (21, 24) pour déplacer l'organe de préhension (26) dans deux directions horizontales, dans les limites du pont (18), en ce que des détecteurs (36) déterminent un emplacement fixe pour le réceptacle dans une position de chargement, et en ce que les moyens de commande comportent des moyens de programmation qui assurent le placement d'emballages successifs en des emplacements prédéterminés de manière à former sur le réceptacle plusieurs couches d'emballages comportant chacune un nombre prédéterminé d'emballages disposés selon un arrangement également prédéterminé.

2. Appareil selon la revendication 1, caractérisé en ce que le réceptacle (16) placé dans la position de chargement repose sur des plaquettes (36) situées à fleur du sol.

3. Appareil selon la revendication 1, caractérisé en ce que l'organe de préhension (26) est une ventouse capable de saisir un emballage par sa face supérieure horizontale et en ce que cette ventouse est montée sur un chariot (24) de façon à être mobile en rotation autour d'un axe vertical.

4. Appareil selon la revendication 3, caractérisé en ce que les moyens (21, 24) pour déplacer l'organe de préhension (26) dans deux directions horizontales comportent un équipage mobile (21) se déplaçant horizontalement dans le sens longitudinal sur le pont (18) et comportant lui-même des moyens de guidage (22) orientés transversalement et conduisant le chariot (24) de façon qu'il puisse se déplacer sur toute la largeur du pont.

5. Appareil selon la revendication 1, caractérisé en ce que le pont (18) est guidé verticalement sur deux montants fixes (17) et s'étend en porte à faux au-dessus de l'emplacement de chargement à partir desdits montants.

6. Appareil selon l'une quelconque des revendications précédentes, caractérisé en ce que le dispositif de présentation rétractile comporte un train de galets (34) mobile horizontalement et guidé par des rails (35) ces derniers étant situés en dehors de l'espace couvert par le pont et orientés de façon que le train de galets (34) puisse s'engager dans ledit espace sur une longueur au moins égale à la moitié de celle de l'emballage (1).

7. Appareil selon la revendication 1, caractérisé en ce que les détecteurs de position (36) qui détectent la position de la palette (16) de chargement comportent des butées de positionnement et des contacts électriques connectés au dispositif de commande.

## Claims

1. Apparatus for handling packages, particularly cases (1) of cigarettes, comprising a gripping device (18, 21, 24, 26) provided with a gripping member (26) movable vertically and capable of seizing a package situated in a presentation position (33), a retractable presentation device (34, 35) capable of supporting a package (1) and of bringing it into the presentation position (33) by a horizontal displacement, this presentation position being situated under the gripping device, and control (20, 21, 24) and driving (29, 30, 31) means capable of bringing a package seized by the gripping device into a predetermined position relative to a receptacle (16) intended to receive a plurality of packages (1), characterized in that the gripping device comprises, on the one hand, a bridge (18) covering a surface which is a multiple of that of a package and which corresponds to the surface of the receptacle and, on the other hand, means (21, 24) for displacing the gripping member (26) in two horizontal directions, within the limits of the bridge (18), in that detectors (36) determine a fixed location for the receptacle in a loading position, and in that the control means comprise programming means which ensure the placement of successive packages at predetermined locations so as to form on the receptacle several layers of packages, each comprising a predetermined number of packages disposed according to a likewise predetermined arrangement.

2. Apparatus according to claim 1, characterized in that the receptacle (16) placed in the loading position rests on small plates (36) situated at floor level.

3. Apparatus according to claim 1, characterized in that the gripping member (26) is a suction-cup capable of seizing a package by its horizontal upper face, and in that this suction-cup is mounted on a carriage (24) so as to be rotatable about a vertical axis.

4. Apparatus according to claim 3, characterized in that the means (21, 24) for displacing the gripping member (26) in two horizontal directions comprise a movable rig (21) moving horizontally in longitudinal direction on the bridge (18) and itself comprising guide means (22) oriented transversely and guiding the carriage (24) so that it can move over the whole width of the bridge.

5. Apparatus according to claim 1, characterized in that the bridge (18) is guided vertically on two fixed uprights (17) and is cantilevered above the loading location from said uprights.

6. Apparatus according to any one of the preceding claims, characterized in that the retractable presentation device comprises a roller train (34) movable horizontally and guided by rails (35), the latter being situated outside the space covered by the bridge and so oriented that the roller train (34) can fit into said space over a length at least equal to half that of the package (1).

7. Apparatus according to claim 1, characterized in that the position detectors (36) which detect the position of the loading pallet (16) comprise positioning stops and electric contacts connected to the control device.

## Patentansprüche

1. Einrichtung zur Förderung von Packungen, insbesondere Zigarettenpackungen (1) mit einer Greifvorrichtung (18, 21, 24, 26), die mit einem Greiforgan (26) versehen ist, das vertikal bewegbar und geeignet ist, eine Packung zu ergreifen, die in einer Uebergabestellung (33) befindlich ist, mit einer zurückziehbaren Uebergabevorrichtung (34, 35), die geeignet ist, eine Packung (1) zu halten und sie in die Uebergabestellung (33) durch eine horizontale Verschiebung zu führen, wobei diese Vorweisstellung unter der Greifvorrichtung befindlich ist, und Betätigungsmittel (20, 21, 24) und Mitnahmemittel (29, 30, 31) vorgesehen sind, die geeignet sind, eine durch das Greiforgan ergriffene Packung in eine in bezug auf eine Sammelstelle (16) vorbestimmte Lage zu führen, die bestimmt ist, eine Mehrzahl von Packungen (1) aufzunehmen, dadurch gekennzeichnet, dass das Greiforgan einerseits eine Brücke (18) aufweist, die eine Fläche bedeckt, welche ein Mehrfaches derjenigen einer Packung beträgt, und die der Oberfläche der Sammelstelle entspricht, und anderseits Mittel (21, 24) vorhanden sind, um das Greiforgan (26) in zwei horizontale Richtungen in den Grenzen der Brücke (18) zu versetzen, und dass Detektoren (36) einen festen Standort für die Sammelstelle in einer Ladestellung bestimmen, und dass die Betätigungsmittel Programmierungsmittel aufweisen, die sicherstellen, dass das aufeinanderfolgende Aufstellen von Verpackungen an vorbestimmten Stellen derart erfolgt, dass an der Sammelstelle mehrere Schichten von Packungen gebildet werden, wobei jede Schicht eine vorbestimmte Zahl von Packungen aufweist, die entsprechend einer ebenfalls vorbestimmten Anordnung angeordnet sind.

2. Einrichtung nach Patentanspruch 1, dadurch gekennzeichnet, dass die als Ladestellung angeordnete Sammelstelle (16) auf Plaketten (36) vorgesehen ist, die in gleicher Höhe mit dem Boden angeordnet sind.

3. Einrichtung nach Patentanspruch 1, dadurch gekennzeichnet, dass das Greiforgan (26) als Saugnapf ausgebildet ist, der eine Packung an ihrer oberen horizontalen Fläche ergreifen kann, und dass der Saugnapf an einem Wagen (24) derart montiert ist, dass er eine Rotationsbewegung um eine vertikale Achse ausführen kann.

4. Einrichtung nach Patentanspruch 3, dadurch gekennzeichnet, dass die Mittel (21, 24) zur Verschiebung des Greiforganes (26) in zwei horizontalen Richtungen einen beweglichen Teil (21) aufweisen, der sich horizontal in longitudinaler Richtung auf der Brücke (18) verschieben kann und Führungsmittel (22) aufweist, die quergerichtet sind und den Wagen (24) derart führen, dass er sich über die ganze Breite der Brücke verschieben kann.

5. Einrichtung nach Patentanspruch 1, dadurch gekennzeichnet, dass die Brücke (18) vertikal an zwei festen Stützen (17) geführt ist und sich frei austragend oberhalb des Ladestandortes von den genannten Stützen aus erstreckt.

6. Einrichtung nach einem der vorangehenden Patentansprüche, dadurch gekennzeichnet, dass die zurückziehbare Uebergabevorrichtung eine Reihe von horizontal beweglichen Rollen (34) aufweist und durch Schienen (35) geführt ist, wobei diese ausserhalb des durch die Brücke bedeckten Raumes befindlich und so orientiert sind, dass die Reihe von Rollen (34) den genannten Raum über eine solche Länge übergreifen kann, die mindestens der Hälfte derjenigen der Packung (1) entspricht.

7. Einrichtung nach Patentanspruch 1, dadurch gekennzeichnet, dass die Positionsdetektoren (36), die die Position der Ladepalette (16) detektieren, Positionsanschläge und elektrische Kontakte aufweisen, die mit der Betätigungsvorrichtung verbunden sind.

FIG.1

0 090 123

FIG.2